# DEMANDE DE BREVET EUROPEEN

(11) **EP 2 560 009 A1**
(43) Date de publication de la demande: **20.02.2013**
(21) Numéro de dépôt: 12178401.1
(22) Date de dépôt: 30.07.2012
(51) Int. Cl.: G01P 3/68

(54) **Dispositif et procédé d'estimation pour estimer la vitesse instantanée d'un individu ou d'un objet**

(30) Priorité: 16.08.2011 FR 1157339
(71) Demandeur: DECATHLON, 59650 Villeneuve d'Ascq (FR)
(72) Inventeur: D'Estais, Mathias, 14000 CAEN (FR); Vincent, Pierre, 17000 LA ROCHELLE (FR); Certier, David, 14480 LE FRESNE CAMILLY (FR)
(74) Mandataire: Balesta, Pierre

(57) **Abrégé**

L'objet selon la présente invention porte sur un dispositif d'estimation (100) permettant d'estimer la vitesse instantanée (V) d'un individu (I) ou d'un véhicule comportant : a) un module de détection (10) comprenant un premier (M1) et un deuxième (M2) capteurs photosensibles configurés chacun pour détecter respectivement une première (P1) et une deuxième (P2) perturbations lumineuses relatives à une variation de la luminosité ambiante (LUX1, LUX2) par rapport à une luminosité ambiante de référence (LUX_REF),b) un module de mesure (20) comprenant un moyen de mesure (CHRONO) configuré pour mesurer la période de temps (Δt) écoulée entre les première (P1) et deuxième (P2) perturbations lumineuses détectées, etc) un module d'estimation (30) comprenant un moyen d'estimation (M4) configuré pour déterminer, en fonction de la distance de séparation (d) entre les deux capteurs (M1, M2) et de la période de temps mesurée (Δt), une estimation de la vitesse instantanée (V_EST) de l'individu (I) qui, lorsqu'il passe successivement devant les premier (M1) et deuxième (M2) capteurs photosensibles, fait varier la luminosité ambiante (LUX1, LUX2).

## Description

### Domaine technique

L'objet de la présente invention a trait aux systèmes de mesure ou d'estimation permettant de fournir une estimation de la vitesse d'un individu ou d'un objet. Plus précisément, l'objet de la présente invention concerne un dispositif d'estimation permettant d'estimer la vitesse instantanée d'un individu ou d'un objet.

L'objet de la présente invention trouve de nombreuses applications avantageuses notamment dans le domaine sportif en permettant à une personne telle qu'un entraîneur de mesurer de façon simple la vitesse instantanée d'un athlète tel qu'un coureur à pieds ou un cycliste.

Bien évidemment, peuvent être envisagées dans le cadre de la présente invention d'autres applications avantageuses telles que par exemple, dans le domaine de la prévention routière, la mesure de la vitesse instantanée d'un véhicule motorisé tel qu'une voiture sur une route sur laquelle la vitesse est limitée.

De nombreuses autres applications équivalentes peuvent également être envisagées dans le cadre de la présente invention.

### Etat de la technique

Dans le monde sportif, la quête des records et la progression de l'athlète sont des éléments essentiels ; elles constituent un challenge et un attrait permanent aussi bien pour les athlètes qui concourent pour battre les records que pour le public qui est friand de tous ces records qui tombent.

Il est donc nécessaire que les athlètes, ou de façon plus générale les sportifs, aient une connaissance précise de leurs performances.

Il existe dans l'état de la technique des systèmes classiques du type radar qui envoient des ondes radio ou des ondes électromagnétiques à une certaine fréquence et qui écoutent l'écho desdites ondes émises, notamment lorsqu'un individu passe devant le radar.

Plus précisément, lorsqu'un individu se trouve dans le champ de l'onde émise, une partie de l'énergie électromagnétique de l'onde est réfléchie vers le radar.

Le radar est ainsi configuré pour capter cette énergie réfléchie. Comme les ondes radio se déplacent à une vitesse constante qui est la vitesse de la lumière, le radar est configuré pour pouvoir calculer la distance de l'individu en fonction du temps qui s'est écoulé entre l'émission de l'onde et la réception de l'écho.

Pour mesurer la vitesse d'un individu, le radar utilise le phénomène connu sous le nom d'effet Doppler : le radar mesure la variation de fréquences de l'onde radio qu'il a envoyée et de l'onde radio qu'il reçoit en écho. Si l'individu s'éloigne, la fréquence est plus petite et inversement, s'il s'approche, celle-ci est plus grande. En fonction de ce changement de fréquences, le radar calcule la vitesse de l'individu.

La technologie d'ondes radio ou d'ondes électromagnétiques utilisée par ces radars classiques est toutefois sensible aux différents types de brouillage.

Pour remédier à ce problème de brouillage, il existe de nouveaux systèmes de mesure connus sous le nom de « LiDaR » pour « Light Detection and Ranging ». Ce genre de systèmes n'utilise pas l'effet Doppler décrit ci-dessus.

Le nouveau type de technologie embarqué dans les systèmes de mesure calcule, en utilisant des lasers infrarouges, la distance de l'individu à des différentes fréquences.

Plus précisément, avec une telle technologie, il est prévu une multitude de calcul de distances dans un intervalle de temps très court. Ensuite, une déduction de la vitesse de l'individu est réalisée en fonction des changements de distance détectés en un temps donné.

La demanderesse soumet que ce type de technologie est de plus en plus utilisé par les systèmes de mesure des forces de l'ordre sur les voies publiques ; on retrouve notamment une telle technologie dans les jumelles-laser et dans les radars automatiques que nous retrouvons de plus en plus sur nos routes.

La demanderesse soumet que les différentes technologies proposées dans l'état de la technique ci-dessus sont des technologies très onéreuses qui sont relativement complexes à mettre en oeuvre.

La demanderesse soumet que les systèmes utilisés actuellement dans l'état de la technique ne sont pas des systèmes à la portée d'un simple individu qui veut mesurer ses performances dans le cadre d'un entraînement sportif ou dans le cadre d'une compétition.

La demanderesse observe donc un défaut manifeste en matière de système de mesure : la demanderesse considère que l'état de la technique ne propose pas de solution satisfaisante en termes de coût permettant une estimation simple et automatique de la vitesse instantanée d'un individu ou d'un objet.

### Résumé de 1"objet de la présente invention

L'objet de la présente invention est d'apporter une solution simple et efficace aux problèmes précités parmi d'autres problèmes, les problèmes liés au coût et à la fabrication étant bien évidemment pris en considération dans l'objet de la présente invention.

L'un des problèmes techniques que résout l'objet de la présente invention consiste donc à proposer une solution visant une estimation en temps réel de la vitesse instantanée d'un individu ou d'un objet qui passe devant un dispositif et/ou un système de mesure ou d'estimation de la vitesse instantanée.

A cet effet, l'objet de la présente invention concerne précisément un dispositif d'estimation permettant d'estimer la vitesse instantanée d'un individu ou d'un objet du type par exemple un véhicule. Bien évidemment, on comprend ici que la vitesse instantanée de tout type d'individu ou d'objet peut être estimée dans le cadre de la présente invention.

Selon la présente invention, le dispositif d'estimation comporte un module de détection comprenant notamment un premier et un deuxième capteurs photosensibles.

Chacun des capteurs est configuré pour détecter respectivement une première et une deuxième perturbations lumineuses relatives à une variation de la luminosité ambiante par rapport à une luminosité ambiante de référence.

Par perturbation lumineuse au sens de la présente invention, il faut comprendre ici une variation de la luminosité ambiante par rapport à la luminosité ambiante de référence. Une telle perturbation lumineuse est par exemple provoquée par un individu qui passe devant un capteur photosensible et qui de ce fait modifie la luminosité ambiante.

Avantageusement, les premier et deuxième capteurs photosensibles sont espacés l'un de l'autre d'une distance de séparation prédéterminée, cette distance de séparation pouvant notamment faire varier la précision de l'estimation réalisée pour la vitesse instantanée.

Selon une variante de réalisation préférée de la présente invention, cette distance de séparation est sensiblement comprise entre 20 et 80 centimètres.

De préférence, cette distance de séparation est sensiblement égale à 40 centimètres.

Selon la présente invention, le dispositif d'estimation comporte également un module de mesure. Le module de mesure comprend notamment un moyen de mesure pour mesurer la période de temps écoulée entre la première et la deuxième perturbations lumineuses détectées.

Le dispositif d'estimation comporte en outre un module d'estimation. Le module d'estimation comprend notamment un moyen d'estimation configuré pour déterminer, en fonction de la distance de séparation et de la période de temps mesurée, une estimation de la vitesse instantanée de l'individu ou de l'objet qui, lorsqu'il passe successivement devant les premier et deuxième capteurs photosensibles, fait varier la luminosité ambiante.

Avantageusement, selon une variante de réalisation préférée de la présente invention, les premier et deuxième capteurs photosensibles sont des capteurs électroniques du type phototransistor ou photorésistance.

Avantageusement, le module de détection comporte un moyen de calibrage configuré pour déterminer la lumière ambiante de référence en sorte de calibrer les premier et deuxième capteurs photosensibles.

Avantageusement, le module de détection comporte un moyen de filtrage pour déterminer si, lorsqu'une perturbation lumineuse a été détectée par le premier ou le deuxième capteur photosensible, celle-ci correspond à une perturbation lumineuse relative au passage d'un individu ou d'un objet du type par exemple véhicule devant le premier ou le deuxième capteur photosensible.

Avantageusement, les premier et deuxième capteurs photosensibles sont configurés chacun d'une part pour mesurer la luminosité ambiante, et d'autre part pour comparer la luminosité ambiante mesurée avec la luminosité ambiante de référence.

Avantageusement, le moyen de filtrage est configuré pour comparer le résultat de la comparaison entre la luminosité ambiante mesurée et la luminosité ambiante de référence avec une marge de tolérance prédéterminée.

Cette caractéristique avantageuse permet d'éviter que des perturbations lumineuses insignifiantes telles que par exemple un passage d'un petit nuage dans le ciel ou d'un oiseau ne viennent perturber l'estimation réalisée.

Selon une variante de réalisation, avantageusement, le dispositif d'estimation selon la présente invention comporte un module d'affichage comprenant notamment un panneau d'affichage, de préférence numérique de type par exemple écran LCD, configuré pour afficher notamment la vitesse instantanée estimée. Tout autre type d'information telle que, par exemple, le record enregistré ou le temps de référence peut également être affiché.

A cet effet, selon une variante de réalisation avantageuse, la présente invention comporte également des moyens de stockage électronique permettant d'enregistrer et de stocker certaines informations telles que par exemple les meilleures vitesses enregistrées.

Avantageusement, le dispositif d'estimation comporte également un support mécanique escamotable configuré pour permettre le réglage de l'inclinaison du module de détection et notamment celle des premier et deuxième capteurs photosensibles.

Ce réglage de l'inclinaison permet notamment de viser la cible souhaitée en fonction notamment de la taille des coureurs. Le dispositif d'estimation selon la présente invention permet ainsi de pouvoir être utilisé aussi bien pour des adultes que pour des enfants.

Avantageusement, le dispositif d'estimation comporte en outre un moyen de préhension tel qu'une poignée de préhension, ceci bien évidemment pour en faciliter le transport.

Corrélativement, l'objet de la présente invention porte sur un procédé d'estimation.

Le procédé d'estimation selon la présente invention permet d'estimer, à l'aide d'un dispositif d'estimation tel que décrit ci-dessus, la vitesse instantanée d'un individu ou d'un objet du type par exemple véhicule.

Selon la présente invention, le procédé d'estimation comporte :
- une première et une deuxième étapes de détection consistant chacune à détecter respectivement une première et une deuxième perturbations lumineuses,
- une étape de mesure consistant à mesurer la période de temps écoulée entre les première et deuxième perturbations lumineuses, et
- une étape d'estimation consistant à déterminer, en fonction de la distance de séparation et de la période de temps mesurée lors de l'étape de mesure, une estimation de la vitesse instantanée de l'individu ou de l'objet du type par exemple véhicule qui, lorsqu'il passe successivement devant les premier et deuxième capteurs photosensibles, fait varier la luminosité ambiante.

Avantageusement, le procédé d'estimation comporte une étape de calibrage consistant, préalablement aux première et deuxième étapes de détection, à déterminer la luminosité ambiante de référence pour calibrer les premier et deuxième capteurs photosensibles.

Avantageusement, le procédé d'estimation comporte une étape de filtrage consistant à déterminer si, lorsqu'une perturbation lumineuse a été détectée par le premier ou le deuxième capteur photosensible, celle-ci correspond à une perturbation lumineuse relative au passage d'un individu ou d'un objet du type par exemple un véhicule devant le premier ou le deuxième capteur photosensible.

Avantageusement, les première et deuxième étapes de détection consistent chacune d'une part à mesurer la luminosité ambiante et d'autre part à comparer la luminosité ambiante mesurée avec la luminosité ambiante de référence.

Avantageusement, selon la présente invention, l'étape de filtrage consiste à comparer le résultat de la comparaison entre la luminosité ambiante mesurée et la luminosité ambiante de référence avec une marge de tolérance prédéterminée.

Ainsi, l'objet de la présente invention, par ses différents aspects fonctionnels, ses caractéristiques avantageuses et l'agencement spécifique des capteurs photosensibles, permet de façon simple et automatisée l'estimation de la vitesse instantanée d'un individu ou d'un objet qui passe devant ledit dispositif de mesure.

### Brève description des figures

D'autres caractéristiques et avantages de la présente invention ressortiront de la description ci-dessus en référence aux figures 1A-1B à 5 annexées qui illustrent un exemple de réalisation dépourvu de tout caractère limitatif et sur lesquelles :
- les figures 1A et 1B représentent respectivement de façon schématique un dispositif d'estimation selon un exemple de réalisation avantageux de la présente invention ;
- la figure 2 représente de façon schématique un organigramme du procédé d'estimation selon la présente invention ;
- les figures 3A et 3B représentent chacune de façon schématique le dispositif de mesure ainsi que les moyens de préhension et le support mécanique escamotable qui lui est associé ;
- la figure 4 représente de façon schématique une vue de face d'une variante de réalisation du dispositif d'estimation selon la présente invention avec le module d'affichage qui lui sont associés ;
- la figure 5 représente de façon schématique une vue en perspective du dispositif d'estimation selon la présente invention.

### Description détaillée d'un exemple de réalisation selon la présente invention

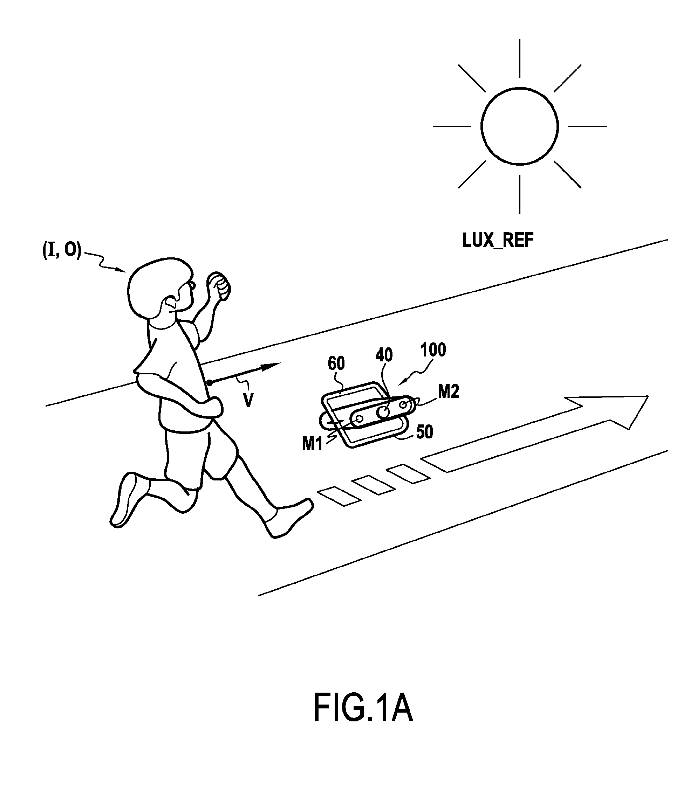

Un dispositif d'estimation et le procédé d'estimation qui lui est associé conformes à un exemple de réalisation avantageux de la présente invention vont maintenant être décrits dans ce qui suit en faisant référence conjointement aux figures 1A-1B à 5.

Permettre la conception d'un dispositif d'estimation simple d'utilisation, ergonomique, et économique est un des objectifs de la présente invention.

A cet effet, comme illustré notamment en figure 1A, l'objet de la présente invention porte sur un dispositif d'estimation 100 qui permet d'estimer la vitesse instantanée V d'un individu I ou d'un objet O du type par exemple véhicule.

On comprend ici que la présente invention trouve de nombreuses applications avantageuses diverses aussi bien dans le domaine sportif pour mesurer les performances d'un coureur par exemple, que dans le domaine de la sécurité routière pour mesurer la vitesse instantanée d'une voiture.

La présente invention est décrite ici dans le contexte spécifique de l'estimation de la vitesse instantanée V d'un individu I, ce qui n'implique bien évidemment aucun caractère restrictif.

Préalablement à la description qui suit, il est remarquable de noter que le dispositif d'estimation 100 selon la présente invention doit être positionné à proximité de la piste sur laquelle l'athlète court. De préférence, ce dispositif 100 doit être positionné sensiblement perpendiculairement à l'axe de la piste, ou plus précisément sensiblement perpendiculairement à l'axe de la course du coureur.

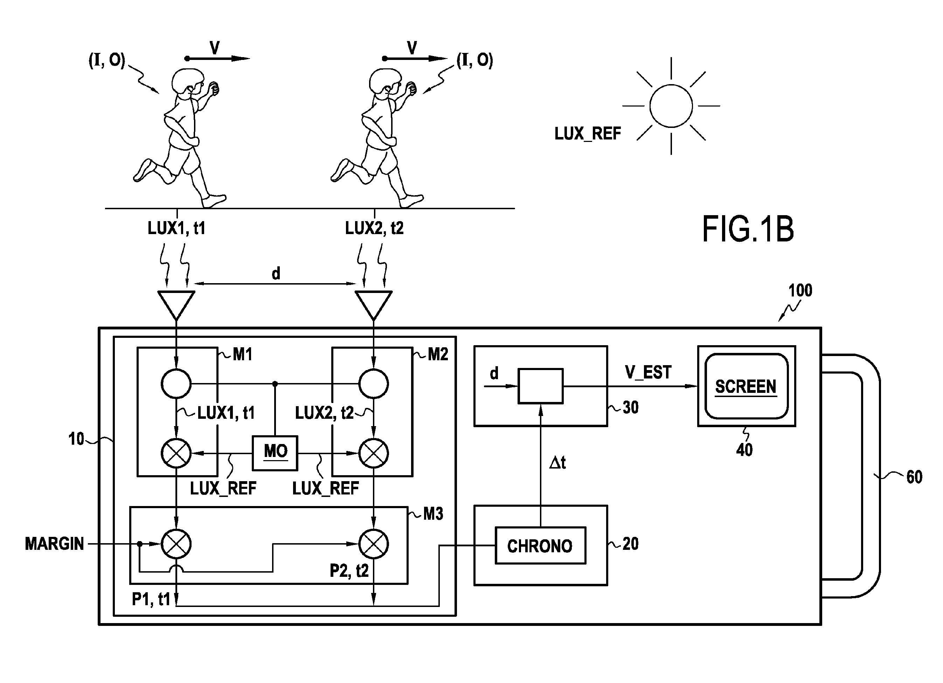

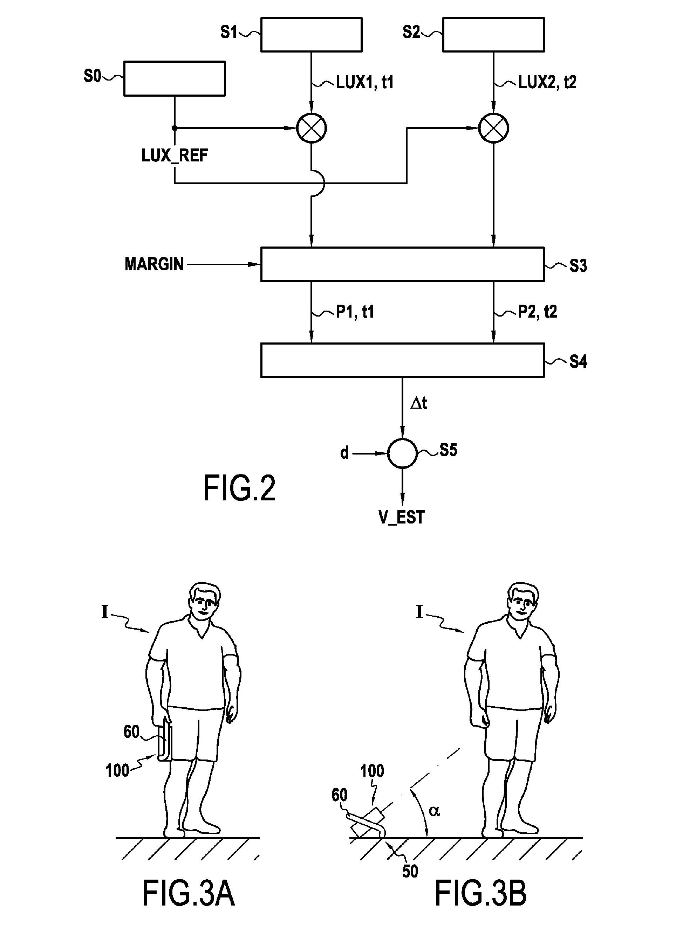

Sur le plan structurel et fonctionnel, dans l'exemple décrit ici, et comme illustré en figures 1B et 2, le dispositif d'estimation 100 selon la présente invention comporte un module de détection 10 qui comprend un premier M1 et un deuxième M2 capteurs photosensibles tels que des phototransistors ou des photorésistances configurés chacun pour détecter, lors d'une première S1 et d'une deuxième S2 étapes, respectivement une première P1 et une deuxième P2 perturbations lumineuses.

Comme expliqué précédemment, chacune de ces perturbations lumineuses P1 et P2 est relative à une variation de la luminosité ambiante LUX1 et LUX2 par rapport à une luminosité ambiante de référence LUX_REF.

Dans l'exemple décrit ici, le module de détection 10 comporte un moyen de calibrage M0 qui est configuré pour déterminer, lors d'une étape de calibrage S0, la luminosité ambiante de référence LUX_REF en sorte de calibrer chacun des premier M1 et deuxième M2 capteurs photosensibles. On comprend ici que le module de détection 10 comprend des moyens de stockage électronique pour stocker les données numériques comprenant les informations telles que cette luminosité ambiante de référence LUX_REF, ces moyens de stockage n'étant pas représentés ici.

Dans l'exemple décrit ici, comme illustré en figure 1B, les premier M1 et deuxième M2 capteurs photosensibles sont configurés d'une part pour mesurer respectivement la luminosité ambiante LUX1 et LUX2, et d'autre part pour comparer cette luminosité ambiante mesurée avec la luminosité ambiante de référence LUX_REF.

Cette comparaison se fait par un calcul du type différence ou ratio, ou tout autre type de comparaison mathématique permettant de comparer les deux valeurs entre elles.

Dans l'exemple décrit ici, les premier M1 et deuxième M2 capteurs photosensibles sont espacés l'un de l'autre d'une distance de séparation d prédéterminée.

Cette distance de séparation d est dans l'exemple de réalisation décrit ici sensiblement comprise entre 20 à 80 centimètres, de préférence sensiblement égale à 40 centimètres.

Eventuellement, il est possible de prévoir des moyens de réglage pour faire varier cette distance d, ces moyens ne sont toutefois pas décrits ni représentés dans les figures annexées. Faire varier cette distance peut permettre d'affiner la précision de l'estimation obtenue au final.

Il est possible que des éléments perturbateurs viennent déclencher ou arrêter de façon intempestive le dispositif d'estimation 100, de tels éléments étant par exemple un changement de luminosité dans le ciel ou un oiseau qui passe, ou tout autre événement ou élément qui viendrait perturber la luminosité ambiante.

Afin d'éviter de tels inconvénients, dans l'exemple décrit ici, le module de détection 10 comporte un moyen de filtrage M3 configuré pour déterminer lors d'une étape de filtrage S3 si, lorsqu'une perturbation lumineuse P1 ou P2 a été détectée par le premier M1 ou le deuxième M2 capteur photosensible, celle-ci correspond bien à une perturbation lumineuse qui est relative au passage d'un individu I ou d'un objet O devant le premier M1 ou le deuxième M2 capteur photosensible.

Dans l'exemple de réalisation décrit ici, le moyen de filtrage M3 est configuré pour comparer le résultat de la comparaison entre la luminosité ambiante mesurée LUX1 ou LUX2 et la luminosité ambiante de référence LUX_REF avec une marge de tolérance prédéterminée MARGIN.

On note ici que les moyens de stockage mentionnés ci-dessus peuvent également servir pour stocker cette marge de tolérance MARGIN.

Dans une variante de réalisation préférée, ce moyen de filtrage M3 comporte un disque obturateur de reflets permettant de valider si la perturbation lumineuse P1 ou P2 qui a été détectée par le premier M1 ou le deuxième M2 capteur photosensible correspond bien à une perturbation lumineuse qui est relative au passage d'un individu I ou d'un objet O.

Dans l'exemple décrit ici, le dispositif d'estimation 100 selon la présente invention comporte un module de mesure 20 comprenant un moyen de mesure CHRONO configuré pour mesurer, lors d'une étape de mesure S4, la période de temps Δt écoulée entre les première P1 et deuxième P2 perturbations lumineuses détectées.

Dans l'exemple décrit ici, le dispositif d'estimation 100 selon la présente invention comporte en outre un module d'estimation 30 comprenant un moyen d'estimation M4 configuré pour, lors d'une étape d'estimation S5, déterminer, en fonction de la distance de séparation d et de la période de temps mesurée Δt, une estimation de la vitesse instantanée V_EST de l'individu I ou de l'objet O.

En effet, lors du passage d'un tel individu I ou d'un tel objet O successivement devant les premier M1 et deuxième M2 capteurs photosensibles, ce dernier fait varier la luminosité ambiante ; c'est le temps écoulé Δt entre les deux perturbations lumineuses successives P1 et P2 détectées par les capteurs M1 et M2 qui permet en fonction de la distance de séparation d de déterminer la vitesse instantanée V_EST de l'individu I ou de l'objet O.

Cette détermination de la vitesse instantanée V_EST peut se faire selon plusieurs variantes dont : a) une première variante qui consiste à réaliser un calcul réel de la vitesse V_EST en fonction de la distance de séparation d et du temps écoulé Δt, ou b) une deuxième variante qui consiste à récupérer cette vitesse V_EST en fonction d'un tableau de données numériques préétabli qui comprend, pour plusieurs valeurs Δt, la valeur relative à une vitesse qui lui est associée, ladite distance d étant dans ce cas prédéterminée et fixe pour chaque colonne du tableau.

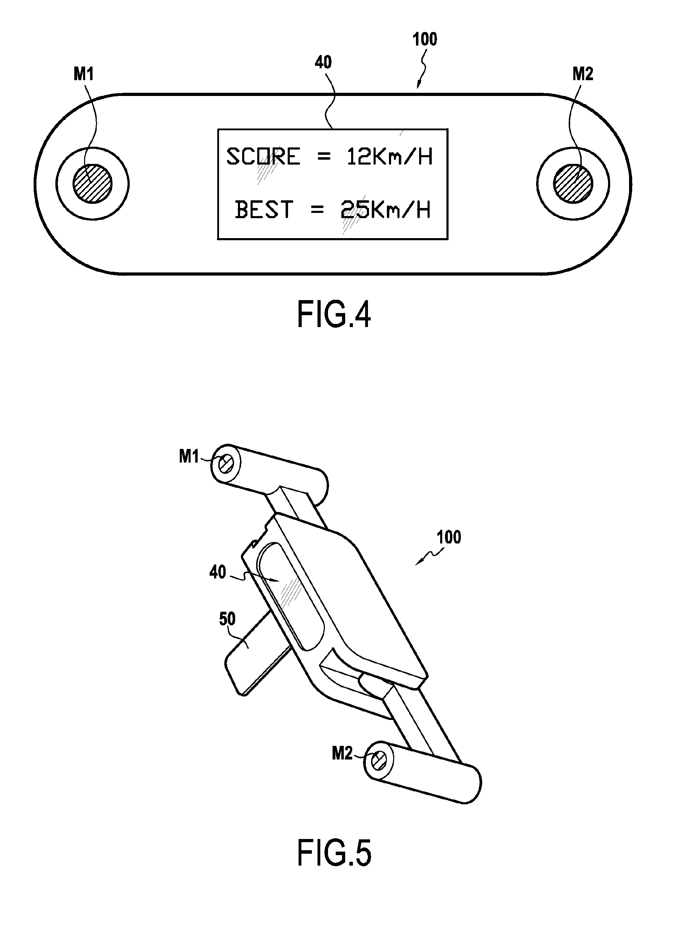

Dans l'exemple décrit ici, et comme illustré en figures 4 et 1B, le dispositif d'estimation 100 selon la présente invention comporte un module d'affichage 40 comprenant un panneau d'affichage SCREEN, de préférence numérique du type par exemple écran LCD, configuré pour afficher notamment la vitesse instantanée estimée V_EST: dans l'exemple de la figure 4, cette vitesse estimée est de 12 kilomètres par heure.

Comme évoqué précédemment, le panneau d'affichage SCREEN est également configuré pour afficher les meilleures vitesses enregistrées : dans l'exemple de la figure 4, la meilleure vitesse est de 25 kilomètres par heure. Bien évidemment, ceci implique que le dispositif d'estimation 100 comporte également des moyens de stockage électronique configurés pour mémoriser la meilleure vitesse, ou les dix meilleures vitesses.

Dans l'exemple décrit ici, et comme illustré en figures 3A-3B et 5, le dispositif d'estimation 100 selon la présente invention comporte un support mécanique 50 escamotable qui est configuré pour permettre le réglage de l'angle d'inclinaison a du module de détection 10, et notamment celui des premier M1 et deuxième M2 capteurs photosensibles. Dans l'exemple décrit ici en figure 5, le support mécanique 50 comporte une patte dont la longueur est réglable.

Dans l'exemple décrit ici, le dispositif d'estimation 100 selon la présente invention comporte un moyen de préhension 60 tel qu'une poignée de préhension 60 pour le transport.

Dans l'exemple décrit ici en figure 5, les capteurs M1 et M2 sont montés sur des bras qui se replient sur eux-mêmes pour former cette poignée de préhension 60.

Grâce à ces différentes caractéristiques techniques, et notamment grâce à l'utilisation de capteurs photosensibles, le dispositif d'estimation selon la présente invention permet à une personne de pouvoir obtenir une estimation de sa vitesse instantanée de façon fiable, ceci notamment pour pouvoir progresser dans son entraînement.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Dispositif d'estimation (100) permettant d'estimer la vitesse instantanée (V) d'un individu (I) ou d'un véhicule, ledit dispositif d'estimation (100) comportant :
a) un module de détection (10) comprenant notamment un premier (M1) et un deuxième (M2) capteurs photosensibles configurés chacun pour détecter respectivement une première (P1) et une deuxième (P2) perturbations lumineuses relatives à une variation de la luminosité ambiante (LUX1, LUX2) par rapport à une luminosité ambiante de référence (LUX_REF), lesdits premier (M1) et deuxième (M2) capteurs photosensibles étant espacés l'un de l'autre d'une distance de séparation (d) prédéterminée,
b) un module de mesure (20) comprenant notamment un moyen de mesure (CHRONO) configuré pour mesurer la période de temps (Δt) écoulée entre les première (P1) et deuxième (P2) perturbations lumineuses détectées, et
c) un module d'estimation (30) comprenant notamment un moyen d'estimation (M4) configuré pour déterminer, en fonction de la distance de séparation (d) et de la période de temps mesurée (Δt), une estimation de la vitesse instantanée (V_EST) de l'individu (I) ou du véhicule qui, lorsqu'il passe successivement devant les premier (M1) et deuxième (M2) capteurs photosensibles, fait varier la luminosité ambiante (LUX1, LUX2).

2. Dispositif d'estimation (100) selon la revendication 1, **caractérisé en ce que** la distance de séparation (d) entre les premier (M1) et deuxième (M2) capteurs photosensibles est sensiblement comprise entre 20 à 80 centimètres, de préférence sensiblement égale à 40 centimètres.

3. Dispositif d'estimation (100) selon la revendication 1 ou 2, **caractérisé en ce que** les premier (M1) et/ou deuxième (M2) capteurs photosensibles sont des capteurs électroniques du type phototransistor ou photorésistance.

4. Dispositif d'estimation (100) selon l'une quelconque des revendications 1 à 3, **caractérisé en ce que** le module de détection (10) comporte un moyen de calibrage (M0) configuré pour déterminer la luminosité ambiante de référence (LUX_REF) en sorte de calibrer les premier (M1) et deuxième (M2) capteurs photosensibles.

5. Dispositif d'estimation (100) selon l'une quelconque des revendications 1 à 4, **caractérisé en ce que** le module de détection (10) comporte un moyen de filtrage (M3) configuré pour déterminer si, lorsqu'une perturbation lumineuse (P1, P2) a été détectée par le premier (M1) ou le deuxième (M2) capteur photosensible, celle-ci (P1, P2) correspond à une perturbation lumineuse relative au passage d'un individu (I) ou d'un véhicule devant le premier (M1) ou le deuxième (M2) capteur photosensible.

6. Dispositif d'estimation (100) selon la revendication 5, **caractérisé en ce que** le moyen de filtrage (6) comporte un disque obturateur de reflets.

7. Dispositif d'estimation (100) selon l'une quelconque des revendications précédentes, **caractérisé en ce que** les premier (M1) et deuxième (M2) capteurs photosensibles sont configurés d'une part pour mesurer la luminosité ambiante (LUX1, LUX2), et d'autre part pour comparer la luminosité ambiante mesurée (LUX1, LUX2) avec la luminosité ambiante de référence (LUX_REF).

8. Dispositif d'estimation (100) selon la revendication 7 rattachée à la revendication 5 ou 6, **caractérisé en ce que** le moyen de filtrage (M3) est configuré pour comparer le résultat de la comparaison entre la luminosité ambiante mesurée (LUX1, LUX2) et la luminosité ambiante de référence (LUX_REF) avec une marge de tolérance prédéterminée (MARGIN).

9. Dispositif d'estimation (100) selon l'une quelconque des revendications 1 à 8, **caractérisé en ce qu'**il comporte un module d'affichage (40) comprenant notamment un panneau d'affichage (SCREEN), de préférence numérique du type par exemple écran LCD, configuré pour afficher notamment la vitesse instantanée estimée (V_EST).

10. Dispositif d'estimation (100) selon l'une quelconque des revendications 1 à 9, **caractérisé en ce qu'**il comporte un support mécanique (50) escamotable configuré pour permettre le réglage de l'inclinaison du module de détection (10), et notamment celle des premier (M1) et deuxième (M2) capteurs photosensibles.

11. Dispositif d'estimation (100) selon l'une quelconque des revendications 1 à 10, **caractérisé en ce qu'**il comporte un moyen de préhension (60) tel qu'une poignée de préhension (60).

12. Dispositif d'estimation (100) selon l'une quelconque des revendications 1 à 11, **caractérisé en ce qu'**il comporte des moyens de stockage électronique configurés pour mémoriser au moins l'une des vitesses estimées.

13. Procédé d'estimation permettant d'estimer, à l'aide d'un dispositif d'estimation (100), la vitesse instantanée (V) d'un individu (I) ou d'un véhicule, ledit dispositif d'estimation (100) comprenant notamment un module de détection (10) comportant un premier (M1) et un deuxième (M2) capteurs photosensibles espacés l'un de l'autre d'une distance de séparation (d) prédéterminée et configurés chacun pour détecter respectivement une première (P1) et une deuxième (P2) perturbations lumineuses relatives à une variation de la luminosité ambiante (LUX1, LUX2) par rapport à une luminosité ambiante de référence (LUX_REF),
ledit procédé d'estimation comportant :
- une première (S1) et une deuxième (S2) étapes de détection consistant chacune à détecter respectivement une première (P2) et une deuxième (P2) perturbations lumineuses,
- une étape de mesure (S4) consistant à mesurer la période de temps (Δt) écoulée entre les première (P1) et deuxième (P2) perturbations lumineuses, et
- une étape d'estimation (S5) consistant à déterminer, en fonction de la distance de séparation (d) et de la période de temps (Δt) mesurée lors de l'étape de mesure (S4), une estimation de la vitesse instantanée (V_EST) de l'individu (I) ou du véhicule qui, lorsqu'il passe successivement devant les premier (M1) et deuxième (M2) capteurs photosensibles, fait varier la luminosité ambiante (LUX1, LUX2).

14. Procédé d'estimation selon la revendication 13, **caractérisé en ce qu'**il comporte une étape de calibrage (S0) consistant, préalablement aux première (S1) et deuxième (S2) étapes de détection, à déterminer la luminosité ambiante de référence (LUX_REF) pour calibrer les premier (M1) et deuxième (M2) capteurs photosensibles.

15. Procédé d'estimation selon la revendication 13 ou 14, **caractérisé en ce qu'**il comporte une étape de filtrage (S3) consistant à déterminer si, lorsqu'une perturbation lumineuse (P1, P2) a été détectée par le premier (M1) ou le deuxième (M2) capteur photosensible, celle-ci (P1, P2) correspond à une perturbation lumineuse relative au passage d'un individu (I) ou d'un véhicule devant le premier (M1) ou le deuxième (M2) capteur photosensible.

16. Procédé d'estimation selon l'une quelconque des revendications 13 à 15, **caractérisé en ce que** les première (S1) et deuxième (S2) étapes de détection consistent chacune d'une part à mesurer la luminosité ambiante (LUX1, LUX2), et d'autre part à comparer la luminosité ambiante mesurée (LUX1, LUX2) avec la luminosité ambiante de référence (LUX_REF).

17. Procédé d'estimation selon la revendication 16 rattachée à la revendication 15, **caractérisé en ce que** l'étape de filtrage (S3) consiste à comparer le résultat de la comparaison entre la luminosité ambiante mesurée (LUX1, LUX2) et la luminosité ambiante de référence (LUX_REF) avec une marge de tolérance prédéterminée (MARGIN).

18. Procédé d'estimation selon l'une quelconque des revendications 13 à 17, **caractérisé en ce qu'**il comporte une étape de stockage d'au moins l'une des vitesses estimées.
